# EUROPÄISCHE PATENTSCHRIFT

(11) **EP 0 935 720 B1**
(45) Veröffentlichungstag und Bekanntmachung des Hinweises auf die Patenterteilung: **23.01.2002**
(21) Anmeldenummer: 97945767.8
(22) Anmeldetag: 20.10.1997
(51) Int. Cl.: F16K 31/06, F15B 13/044

(54) **WEGEVENTIL**
DIRECTIONAL VALVE
VANNE

(30) Priorität: 11.11.1996 DE 19646426
(43) Veröffentlichungstag der Anmeldung: 18.08.1999
(73) Patentinhaber: Mannesmann Rexroth AG, 97816 Lohr am Main (DE)
(72) Erfinder: KNÖLL, Burkhard, D-97816 Lohr (DE)
(74) Vertreter: Polte, Willi, Dr.-Ing. Dipl.-Ing.
(86) Internationale Anmeldenummer: DE9702424
(87) Internationale Veröffentlichungsnummer: WO9821510

(56) Entgegenhaltungen:
- CH-A- 484 497
- CH-A- 530 564
- DE-A- 3 508 340
- DE-A- 19 607 773
- US-A- 2 515 029
- US-A- 3 701 366

## Beschreibung

Die Erfindung betrifft ein elektrisch betätigtes Wegeventil gemäß dem Oberbegriff des Patentanspruchs 1.

Derartige elektrisch betätigte Wegeventile werden in der Mobilhydraulik häufig zur Ansteuerung von doppeltwirkenden Hubzylindern eingesetzt, wie sie beispielsweise bei Frontkrafthebern oder Heckkrafthebern von Ackerschleppern verwendet werden. Mit Hilfe dieser Kraftheber lassen sich unterschiedliche Peripheriegeräte, wie beispielsweise Packer, Pflüge, Grubber, Walzen, etc. an einen Ackerschlepper ankoppeln und betätigen, so daß eine Last abgesenkt oder angehoben werden kann.

Bei einigen Anwendungen ist es erforderlich, das Wegeventil in eine Schwimmstellung zu schalten, in der die beiden Arbeitsanschlüsse, d.h. die zu den beiden Zylinderräumen des Hubzylinders führenden Anschlüsse miteinander verbunden sind. In dieser Schwimmstellung kann beispielsweise eine Walze Bodenunebenheiten folgen, ohne daß über den Hubzylinder eine Rückstellkraft ausgeübt wird.

In der DE 35 08 340 C2 ist ein Mehrwegeventil offenbart, bei dem der Wegeventilschieber an einem hydraulisch betätigten Gegenhaltekolben abgestützt ist, über den der Wegeventilschieber derart beaufschlagt ist, daß er nicht in die Schwimmstellung verschiebbar ist. Zum Umschalten des Wegeventils in die Schwimmstellung wird der Gegenhaltekolben hydraulisch entlastet, so daß der Wegeventilschieber durch einen an seiner vom Gegenhaltekolben entfernten Steuerseite anliegenden Steuerdruck in die Schwimmstellung bringbar ist.

Da in der Mobilhydraulik eingesetzte Ventilsysteme häufig in Scheibenbauweise oder als Monoblock ausgeführt sind, müssen im Grundkörper eines derartigen Ventiles die Aufnahmebohrungen für den Gegenhaltekolben und die Steuerleitungen zur Ansteuerung des Wegeventilschiebers und des Gegenhaltekolbens vorgesehen werden, so daß der Ventilgehäuseaufbau (Scheibe, Kompaktblock) einen erheblichen fertigungstechnischen Aufwand erfordern. Des weiteren sind derartige Ventilgehäuse mit dem aufwendigen Kanalsystem nur an besondere Anwendungsfälle angepaßt, so daß Varianten auch erhebliche Gehäuseänderungen mit sich ziehen.

Es sind auch eine Reihe von elektrisch betätigten Wegeventilanordnungen bekannt, bei denen der Wegeventilschieber durch Elektromagnete in seine Schaltpositionen bewegbar ist. Dabei sind dem Wegeventilschieber in der Regel zwei Elektromagnete zugeordnet, über die dieser aus einer Sperrstellung in zwei Schaltstellungen zur Ansteuerung vorzugsweise eines doppeltwirkenden Verbrauchers bringbar ist. Beispielhaft sei auf die DE-AS 17 50 271 verwiesen, in der ein Stössel zur Betätigung des Wegeventilschiebers über zwei hintereinandergeschaltete Elektromagnete in zwei Positionen verschiebbar ist, um das Wegeventil in die beiden vorgenannten Schaltstellungen zu bringen.

Eine derartige Anordnung erfordert zwar einen geringeren fertigungstechnischen Aufwand bei der Ausbildung des Ventilgehäuses, nachteilig ist jedoch, daß neben der Nullstellung und den beiden Arbeitsstellungen keine vierte Schaltstellung, wie beispielsweise die vorbeschriebene Schwimmstellung realisierbar ist. Demgegenüber liegt der Erfindung die Aufgabe zugrunde, ein elektrisch betätigtes Wegeventil zu schaffen, das bei minimalem vorrichtungstechnischen Aufwand auf einfache Weise in eine Sperrstellung, in zumindest zwei Arbeitsstellungen und eine Endschaltstellung bringbar ist.

Diese Aufgabe wird durch die Merkmale des Patentanspruchs 1 gelöst.

Durch die Maßnahme, dem Ventilschieber neben den beiden Steuerelektromagneten einen dritten Elektromagneten zuzuordnen, der eine Umschaltung aus einer Arbeitsstellung in eine Endschaltstellung bewirkt, kann eine derartige Endschaltstellung, beispielsweise die Schwimmstellung, realisiert werden, ohne daß Steuerkanäle und Aufnahmebohrungen für Vorsteuerventileinrichtungen im Ventilgehäuse vorgesehen werden müssen.

Eine besonders kompakt bauende Ventilanordnung erhält man, wenn der Elektromagnet koaxial zu einem der Steuerelektromagneten ausgebildet wird. In diesem Fall ist es besonders bevorzugt, wenn der dritte Elektromagnet und der Steuermagnet einen gemeinsamen Anker aufweisen, dem zwei koaxial hintereinanderliegende Spulen zugeordnet sind, die in entgegengesetzter Richtung bestrombar sind, so daß die eine Spule in ziehender Richtung auf den Anker wirkt, während die andere Spule den Anker in Stossrichtung, d.h. hin zum Ventilschieber beaufschlagt.

Bei einer derartigen Variante wird die Schwimmstellung vorzugsweise durch Ansteuern des dritten Elektromagneten und des zweiten (gegenüberliegenden) Steuermagneten eingestellt, wobei der gemeinsame Anker erst durch Bestromung des (gegenüberliegenden) zweiten Steuermagneten in den Einwirkbereich der dem dritten Elektromagneten zugeordneten Spule bringbar ist.

Der Ventilaufbau ist besonders einfach, wenn der Wegeventilschieber durch zwei Druckfedern in seine Nullstellung vorgespannt ist, die an der Rückseite der beiden stirnseitigen Anker angreifen, die wiederum über Stössel auf den Ventilschieber wirken.

Zusätzlich zu den beiden Druckfedern ist an der dem zweiten Steuermagnet zugeordneten Ventilschieberstirnseite eine Vorspannfeder vorgesehen, die über zwei axial verschiebbare Federteller am Ventilgehäuse abgestützt ist. Diese Vorspannfeder hat eine geringere Federrate als die auf den Anker dieses Steuermagneten wirkende Druckfeder. Die beiden Federteller sind entweder durch die benachbarte Ventilschieberstirnseite oder den Stössel des Elektromagneten aus ihrer Abstützpösition am Gehäuse abhebbar, so daß die Vorspannfeder entweder durch die Axialbewegung des Ventilschiebers oder durch die Stellbewegung des Stössels vorgespannt wird und die Stellbewegung des Ventilschiebers in beiden Richtung praktisch gegen die Vorspannung der Vorspannfeder erfolgt. Bei Bestromung des zweiten Steuermagneten wird die Vorspannkraft ab einem gewissen Axialweg des Stössels so gross, daß der Stössel des zweiten Steuermagneten nicht mehr über diese Grenzaxialverschiebung hinausbewegbar ist und somit keine weitere Kraft mehr auf den Ventilschieber ausüben kann.

Bei Bestromung des dritten Elektromagneten (gegenüberliegende Seite) hebt der Ventilschieber während seiner Axialverschiebung von dem Stössel des zweiten Steuermagneten ab. Die Axialbewegung des Wegeventilschiebers erfolgt dabei, indem dieser entweder mit dem Stössel des dem dritten Elektromagneten zugeordneten Ankers verbunden ist oder durch die Kraft einer Steuerfeder, die einerseits am stösselseitigen Federteller für die Vorspannfeder und andererseits an der benachbarten Stirnseite des Wegeventilschiebers abgestützt ist. Die Federrate dieser Ventilfeder ist geringer als diejenige der Druckfeder oder der Vorspannfeder gewählt.

Bei einer bevorzugten Ausführungsform greift die Steuerfeder nicht direkt am stösselseitigen Federteller an sondern an einem Anschlagkörper, an dem der Federteller während der Axialbewegung des Stössels abstützbar ist.

Besonders vorteilhaft ist es, wenn für die Steuer- und Elektromagnete kraftgeregelte Proportionalmagnete verwendet werden, so daß durch entsprechende Ansteuerung der Elektromagnete eine Vielzahl von Arbeitsstellungen zur Versorgung des Verbrauchers mit Hydraulikfluid, eine Nullstellung und die vorbeschriebene Endschaltstellung (Schwimmstellung) einstellbar sind.

Sonstige vorteilhafte Weiterbildungen der Erfindung sind Gegenstand der übrigen Patentansprüche.

Ein bevorzugtes Ausführungsbeispiel der Erfindung wird im folgenden anhand schematischer Zeichnungen näher erläutert.

Es zeigen:
Fig. 1 eine Schnittdarstellung einer Ventilanordnung, die mit einem erfindungsgemäßen Wegeventil ausgeführt ist;
Fig. 2 das Wegeventil aus Fig. 1 in einer Nullstellung;
Fig. 3 eine Detaildarstellung des Wegeventils aus Fig. 2;
Fig. 4 das Wegeventil aus Fig. 1 in einer Arbeitsstellung und
Fig. 5 das Wegeventil aus Fig. 1 in einer Schwimmstellung.

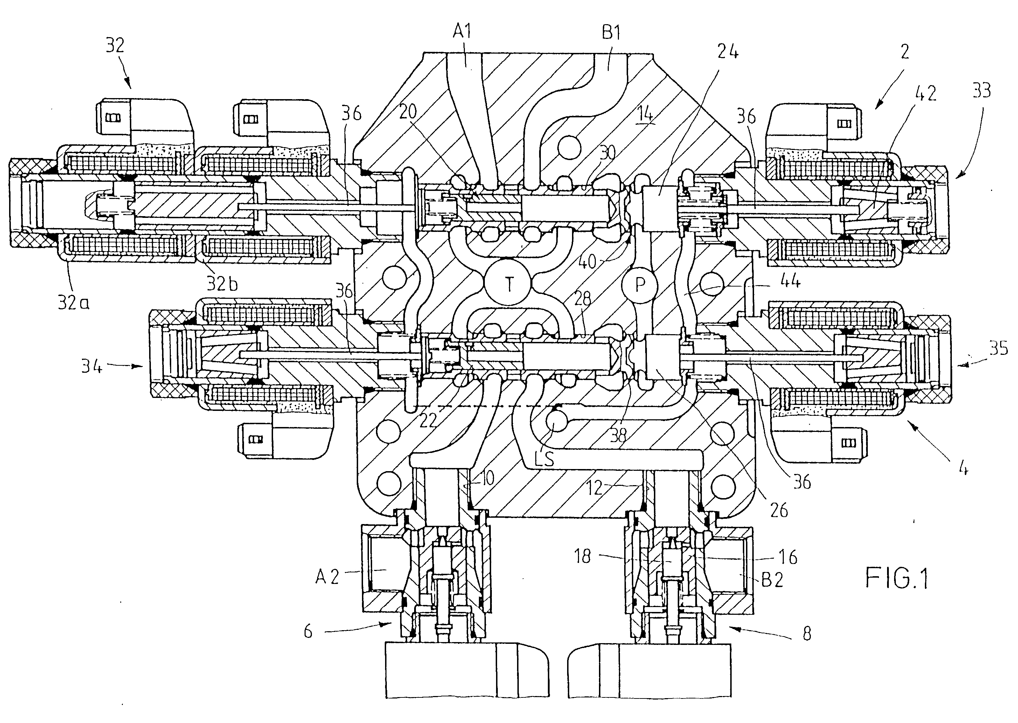

Fig. 1 zeigt einen Schnitt durch eine Ventilanordnung 1 mit zwei parallel angeordneten Wegeventilen 2, 4, über die ein Arbeitsanschluß P und ein Tankanschluß T wahlweise mit zwei Arbeitsanschlüssen A₁, B₁ (Wegeventil 2) oder A₂, B₂ (Wegeventil 4) verbindbar sind. Das heißt, über das Wegeventil 2 wird ein an die Arbeitsanschlüsse A₁, B₁ angeschlossener Verbraucher angesteuert, während das Wegeventil 4 zur Ansteuerung eines an die Arbeitsanschlüsse A₂, B₂ angeschlossenen Verbrauchers vorgesehen ist. Dieser Verbraucher kann ein doppeltwirkender Zylinder (nicht gezeigt) eines Front- oder Heckkrafthebers eines Ackerschleppers sein.

Die dem Wegeventil 4 zugeordneten Arbeitsanschlüsse A₂, B₂ werden durch Radialanschlüsse von elektrisch entsperrbaren Rückschlagventilen 6, 8 gebildet, die in Anschlußbohrungen 10, 12 einer Ventilplatte 14 der Ventilanordnung 1 eingeschraubt sind. Die Hauptkegel 16 der Rückschlagventile 6, 8 sind mit Voröffnung ausgeführt, wobei der Voröffnungskegel 18 durch die Elektromagnete der Rückschlageventile 6, 8 axial verschiebbar ist, um eine Durchströmung vom Radialanschluß hin zum Tankanschluß T zu ermöglichen. Da derartige Rückschlagventile 6, 8 im Detail in der parallelen Patentanmeldung DE 19646425 der Anmelderin beschrieben sind, sei zur Vermeidung von unnötigen Wiederholungen auf die Offenbarung in dieser Patentanmeldung verwiesen.

Jedem Wegeventil 2, 4 ist eine Individualdruckwaage 20, 22 zugeordnet, über die der Systemdruck, d.h. der am Pumpenanschluß P anliegende Druck auf den jeweiligen individuellen Verbraucherdruck (Lastdruck des Hubwerkes) abgedrosselt wird. Beim gezeigten Ausführungsbeispiel ist die Individualdruckwaage 20 bzw. 22 in einem als Hohlschieber ausgeführten Ventilschieber 24 bzw. 26 aufgenommen, der in einer Ventilbohrung 28 bzw. 30 der Ventilplatte 14 geführt ist.

Die Axialverschiebung der Ventilschieber 24, 26 erfolgt jeweils über beidseitig angeordnete Elektromagnetanordnungen 32 bis 35, deren Stössel auf die Stirn- oder Steuerseite der Ventilschieber wirken. An jedem Ventilschieber 24 und 26 ist eine Meßblende 38 bzw. 40 ausgebildet, die zwischen dem Pumpenanschluß der Individualdruckwaage 20 vorgesehen ist, so daß durch Zusammenwirkung der Individualdruckwaage 20, 22 und der Meßblende 38, 40 ein Stromregelventil gebildet ist, über das bei einer vorbestimmten Öffnung der Meßblende (verursacht durch Bestromung der Elektromagnete 32 bis 35) ein lastdruckunabhängiger Volumenstrom zum jeweiligen Verbraucher gewährleistet ist.

Bei den beiden Wegeventilen 2, 4 handelt es sich um stetig verstellbare 4-Wegeventile, wobei jeweils der Aufbau des Ventilschiebers 24, 26 mit der Meßblende 38, 40 und der im Ventilschieber 24, 26 geführten Druckwaage 20, 22 prinzipiell gleich ist, so daß sich auf die Beschreibung des Wegeventils 2 beschränkt werden kann.

Beide Wegeventile 2, 4 unterscheiden sich im Prinzip nur durch die Art der Ansteuerung, wobei es sich bei der Ansteuerung des Wegeventils 4 um eine prinzipiell bekannte Ansteuerung über die Elektromagnete 34, 35 handelt, die direkt auf die Stirnseiten des zugeordneten Ventilschiebers 26 wirken.

Im Gegensatz dazu sind beim Wegeventil 2 einer Steuerseite, d.h. der linken in Fig. 1, zwei Elektromagnete 32a, 32b zugeordnet, die einen gemeinsamen Doppelanker 106 aufweisen. Die Ansteuerung der in Fig. 1 rechten Steuerseite des Ventilschiebers 24 des Wegeventils 2 entspricht im Prinzip derjenigen des Wegeventils 4.

Eine weitere Besonderheit der in Fig. 1 dargestellten Ventilanordnung besteht darin, daß die Federräume (siehe folgende Beschreibung) der Ventilschieber 24, 26 über einen gemeinsamen Steuerkanal 44 mit einem Steueranschluß LS verbunden sind. Demgemäß herrscht an beiden Stirnseiten des Wegeventilschiebers ein Steuerdruck, der gleich dem größten Lastdruck des Systems, einem Individuallastdruck oder einem davon abgeleiteten Lastdruck sein kann.

Der prinzipielle Aufbau der Wegeventilanordnung ist im Detail in der eingangs genannten Parallelanmeldung DE 19646425 der Anmelderin beschrieben, so daß im folgenden lediglich noch auf einige wesentliche konstruktive Einzelheiten der Ventilschieberanordnung mit der Druckwaage eingegangen werden muß. Hinsichtlich konstruktiver Einzelheiten sei auf die Offenbarung der DE 19646425 verwiesen.

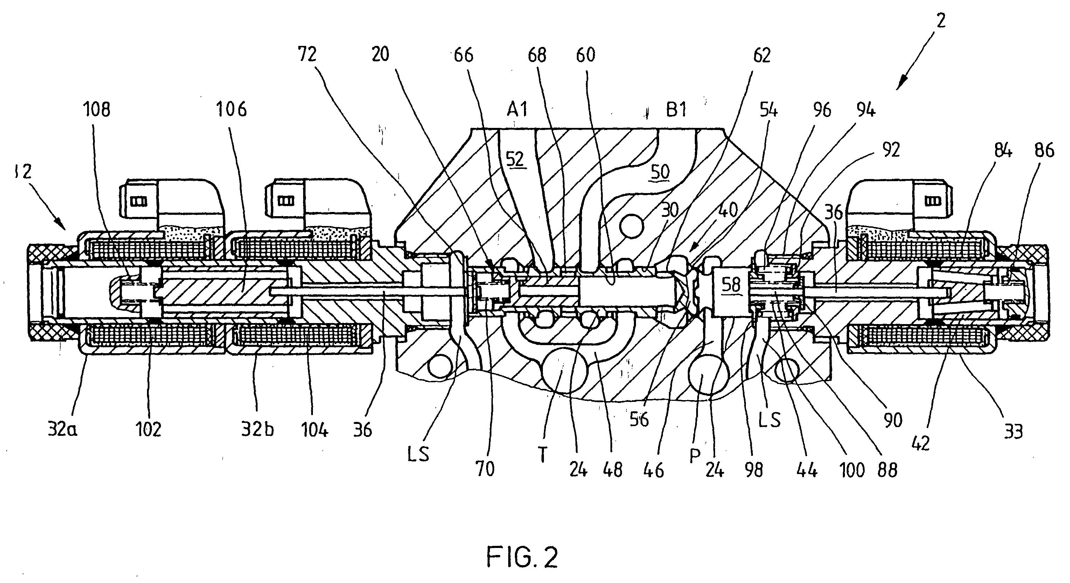

Die Anschlüsse der Ventilanordnung, d.h. der Pumpenanschluß P, der Tankanschluß T, der Steueranschluß LS, und die Arbeitsanschlüsse A₁ und B₁ sind über Verbindungskanäle (Pumpenkanal 46, Steuer- oder Lastmeldekanal 44, Tankkanal 48, Verbindungskanäle 50, 52) verbunden und münden jeweils über Ringräume (nicht mit Bezugszeichen versehen) in der Ventilbohrung 30 des Wegeventils 2. Der Ventilschieber 24 ist seinerseits mit Ringnuten versehen, deren Geometrie so gewählt ist, daß benachbarte Ringräume der oben genannten Verbindungskanäle durch Verschieben des Ventilschiebers 24 miteinander verbindbar sind. In der in Fig. 2 dargestellten Grundposition ist die Verbindung von den Arbeitsanschlüssen A₁, B₁ zum Tankanschluß T und zum. Pumpenanschluß P abgesperrt. Die Meßblende 40 wird durch einen Ventilbohrungsabschnitt 54 und einen Ventilschieberabschnitt 56 gebildet, der mit Feinsteuernuten versehen ist, so daß durch Axialverschiebung des Ventilschiebers 24 der als Meßblendenbohrung wirkende Ventilbohrungsabschnitt 54 aufgesteuert wird, wobei der Öffnungsquerschnitt von der Axialverschiebung des Ventilschiebers 24 abhängt. Das sich in Fig. 2 rechts an den Ventilschieberabschnitt 56 anschließende Ende des Ventilschiebers 24 ist durch einen zylindrischen Steuerabschnitt 58 gebildet.

In dem anderen Endabschnitt des Ventilschiebers 24 ist eine Sacklochbohrung ausgebildet, die als Führungsbohrung 60 für einen Kolben 66 dient. Die Führungsbohrung 60 erstreckt sich bis knapp vor den Ventilschieberabschnitt 56, wobei im Endbereich der Aufnahmebohrung 60 eine radiale Eingangsbohrung - oder besser gesagt - ein Eingangsbohrungsstern ausgebildet ist, der den Ringmantel des Ventilschiebers 24 durchsetzt. Im mittleren Bereich der Führungsbohrung 60 mündet ein Mantelbohrungsstern 68, über den eine Verbindung zwischen der Führungsbohrung 60 und den Verbindungskanälen 50 oder 52 herstellbar ist. In der in Fig. 2 dargestellten Grundposition liegt der Kolben 66 mit einem Radialbund an einer Anschlagschulter der Führungsbohrung 60 an, wobei die Axiallänge des Kolbens 66 derart gewählt ist, daß in dieser Grundposition der Mantelbohrungsstern 68 verschlossen ist. An der radialbundseitigen Stirnseite (links in Fig. 2) des Kolbens 66 greift eine Steuerfeder 70 an, die den Kolben 66 in seine Anschlagposition vorspannt. Die Druckwaagefeder 70 ist an einer Anschlagscheibe 72 abgestützt, die in der Aufnähmebohrung 60 befestigt ist.

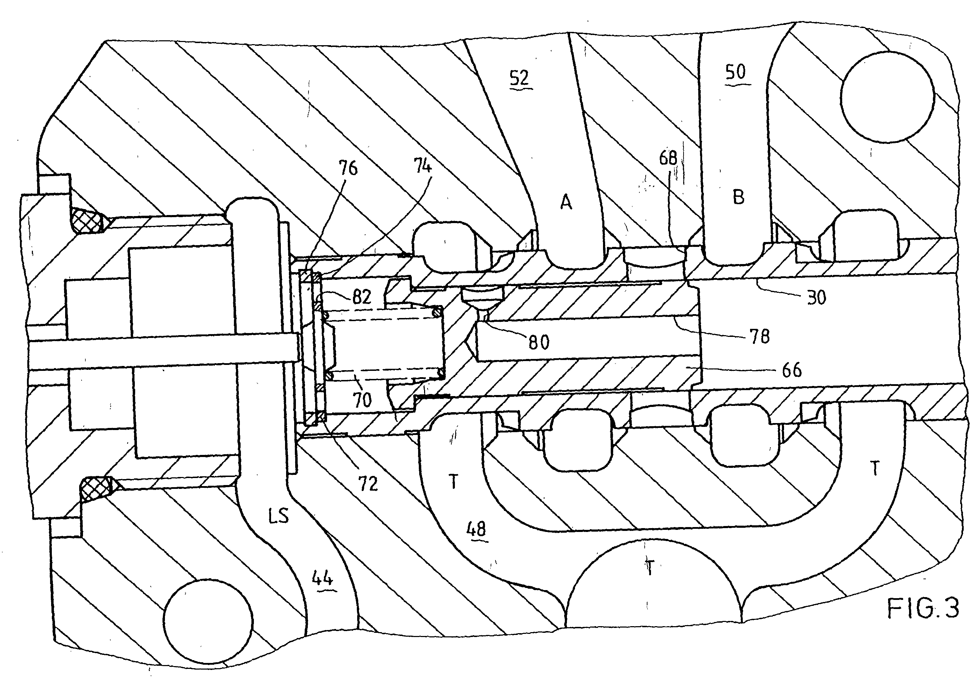

Fig. 3 zeigt in vergrößerter Form denjenigen Teil des Wegeventils 2, in dem diese Anschlagscheibe 72 aufgenommen ist. Aus dieser Darstellung geht hervor, daß die Anschlagscheibe 72 einerseits an einer Radialschulter 74 und andererseits an einen Sicherungsring 76 abgestützt ist, der in einer Umfangsnut desjenigen radial erweiterten Teils der Führungsbohrung 30 aufgenommen ist, in dem der Radialbund des Kolbens 66 aufgenommen ist. Dieser ist mit einer in der rechten (Fig. 3) Stirnseite mündenden Verbindungsbohrung 78 versehen, die mit einem radial verlaufenden Drosselabschnitt 80 im Außenumfang des Kolbens 66 mündet.

Die Anschlagscheibe 72 ist mit Durchgangsbohrungen 82 versehen, so daß der Steuerdruck im Steuerkanal 44 auch auf die Federseite des Kolbens 66 wirkt.

Die Axialverschiebung des Ventilschiebers 24 erfolgt einerseits durch den Elektromagneten 33 (rechts in Fig. 2) und andererseits durch die Elektromagnetanordnung 32, deren Stössel 36 auf die Anschlagscheibe 72 bzw. die Stirnseite des Steuerabschnitts 58 wirken.

Der Elektromagnet 33 ist ein herkömmlicher Elektromagnet mit einem auf einem Polrohr aufgenommenen Spulenkörper 84, der den Anker 42 umgibt. Dieser ist mit Axialdurchgangsbohrungen versehen, über die der Steuerdruck im Steuerkanal 44 zur Rückseite des Ankers 42 geführt ist, so daß dessen Stirnseiten druckausgeglichen sind. An der Rückseite des Ankers 42 greift eine Druckfeder 86 an, die den Anker 42 mit dem Stössel 36 gegen den Ventilschieber 24 vorspannt. Bei dem Elektromagnet 33 handelt es sich im einen stossenden Proportionalmagneten, so daß bei Bestromung des Spulenkörpers 84 der Anker 42 und damit der Ventilschieber 24 nach links (Fig. 2) bewegt wird.

Der Stössel 36 des Elektromagneten 33 hat einen im Durchmesser verringerten Endabschnitt 88. An der dadurch entstandenen Schulter liegt ein Anschlagkörper 90 an, an dem wiederum ein Federteller 92 abgestützt ist.

Der Federteller 92 hat einen Radialflansch, mit dem er in Richtung zum Anker 42 in der in Fig. 2 dargestellten Grundstellung an einer gehäusefesten Schulter (nicht mit Bezugszeichen versehen) abgestützt ist. Bei dem vorliegenden Ausführungsbeispiel ist diese Schulter am Einschraubabschnitt 94 des Elektromagneten 33 ausgebildet. Somit wird bei Bestromung des Elektromagneten 33 der Federteller 92 über den Anschlagkörper 90 und den Stössel 36 aus seiner Anlageposition bewegt, so daß eine Vorspannfeder 96 gespannt wird, die ihrerseits an einem zweiten Federteller 98 abgestützt ist, der mit einem Radialflansch an einer Stützschulter der Ventilschieberbohrung 30 anliegt (Grundstellung). In der in Fig. 2 gezeigten Grundstellung liegt der Federteller 98 auch an der benachbarten Stirnseite des Steuerabschnitts 58 des Ventilschiebers 24 an.

Am Anschlagkörper 90 ist des weiteren eine Steuerfeder 100 abgestützt, die auf die Stirnseite des Steuerabschnitts 58 wirkt. Die Vorspannfeder 96 hat eine größere Federrate als die Druckfeder 86, die wiederum eine größere Federrate als die Steuerfeder 100 aufweist.

Die Axiallänge des Endabschnitts 88 und der Axialabstand der Federteller 92 und 98 sind derart gewählt, daß in der Grundstellung (Fig. 2) über die Vorspannfeder 96 keine Kraft auf den Ventilschieber 30 oder den Stössel 36 ausgeübt wird, so daß die Vorspannung des Stössels 36 hin zum Ventilschieber 24 im wesentlichen durch die Druckfeder 86 bestimmt ist.

Wie bereits eingangs erwähnt, hat die Elektromagnetanordnung 32 zwei Teilelektromagnete 32a, 32b, mit zwei koaxial im Abstand zueinander angeordneten Spulenkörpern 102 und 104, denen der gemeinsame Doppelanker 106 zugeordnet ist, der wiederum über eine Druckfeder 108 in Richtung zum Ventilschieber 24 vorgespannt ist, so daß der Stössel 36 an der Anschlagscheibe 72 anliegt.

In der in Fig. 2 dargestellten Grundstellung ist der Doppelanker 106 derart relativ zu den beiden Spulenkörpern 102, 104 angeordnet, daß der magnetische Fluß vom Spulenkörper 102 durch den Doppelanker 106 vernachlässigbar ist, während bei einer Bestromung des Spulenkörpers 104 der Doppelanker 106 aus der gezeigten Grundposition heraus bewegt wird, so daß der Ventilschieber 24 nach rechts verschoben wird.

Die Spulenkörper 102 und 104 sind in entgegengesetzter Richtung bestrombar, so daß der Spulenkörper 104 in stossender Richtung auf den Doppelanker 106 wirkt, während der Spulenkörper 102 eine Wirkung in ziehender Richtung entfalten kann. Der Doppelanker 106 ist wiederum mit Entlastungsbohrungen versehen, über die gewährleistet ist, daß der Steuerdruck (Lastdruck) auch an der Ankerrückseite anliegt.

Anhand der folgenden Figuren soll - soweit erforderlich - die Funktionsweise des erfindungsgemäßen Wegeventils erläutert werden.

In der in Fig. 2 dargestellten Grundstellung ist keiner der Elektromagnete 32, 33 bestromt, so daß der Ventilschieber 24 durch die Wirkung der Druckfedern 86 und 108 und die Vorspannfeder 96 in seiner Grundposition (Nullstellung) gehalten wird, in der die Arbeitsanschlüsse A₁ und B₁ gegenüber dem Tankanschluß T und dem Pumpenanschluß P abgesperrt sind.

Bei Bestromung des Elektromagneten 33 wird der Stössel 36 gegen die Kraft der Vorspannfeder 96 und der auf den Doppelanker 106 wirkenden Druckfeder 108 nach links (Fig. 2) bewegt und dadurch die Meßblendenöffnung aufgesteuert. Die Axialbewegung hängt von der Stromstärke ab, mit der der Elektromagnet 33 beaufschlagt wird. Durch den Hub des Stössels 36 wird der Federteller 92 von seiner Anlageposition am Gehäuse abgehoben und die Vorspannfeder 96 gespannt. Eine weitere Spannung der Steuerfeder 100 erfolgt nicht, da der Federteller 92 am Anschlagkörper 90 anliegt und der Axialabstand des Federtellers 92 zum Ventilschieber 24 konstant bleibt. Der Federteller 98 bleibt in seiner Stützposition am Gehäuse.

Das am Pumpenanschluß anstehende Hydraulikfluid tritt durch die Drosselblende hindurch in den stromabwärts dahinterliegenden Ringraum und anschließend durch den Eingangsbohrungsstern 62 in die Führungsbohrung 60, so daß der Druckwaagenkolben 66 gegen die Wirkung des Steuerdruckes und die Kraft der Steuerfeder 70 von seinem Anschlag abgehoben wird. Durch diese Axialverschiebung des Kolbens 66 wird der Mantelbohrungsstern 68 aufgesteuert, so daß das Hydraulikfluid gedrosselt in den Verbindungskanal 52 einströmen kann. Da die Steuerfeder 70 eine vergleichsweise geringe Federkonstante hat, kann man in erster Näherung annehmen, daß bei geöffneter Druckwaage im Verbindungskanal 52 und in der Aufnahmebohrung 60 der Lastdruck anliegt. Für den Fall, daß dieser Lastdruck höher als der Steuerdruck im Steuerkanal 44 ist, wird der Kolben 66 soweit ausgelenkt, bis die Drosselbohrung 80 aufgesteuert wird und die Kolbenvorderseite mit dem Federraum des Kolbens 66 verbunden ist, so daß auch im Steuerkanal 44 dieser höhere Lastdruck herrscht, mit dem in der Folge dann auch die Stirnseiten des Ventilschiebers 26 des Wegeventils 4 beaufschlagt werden.

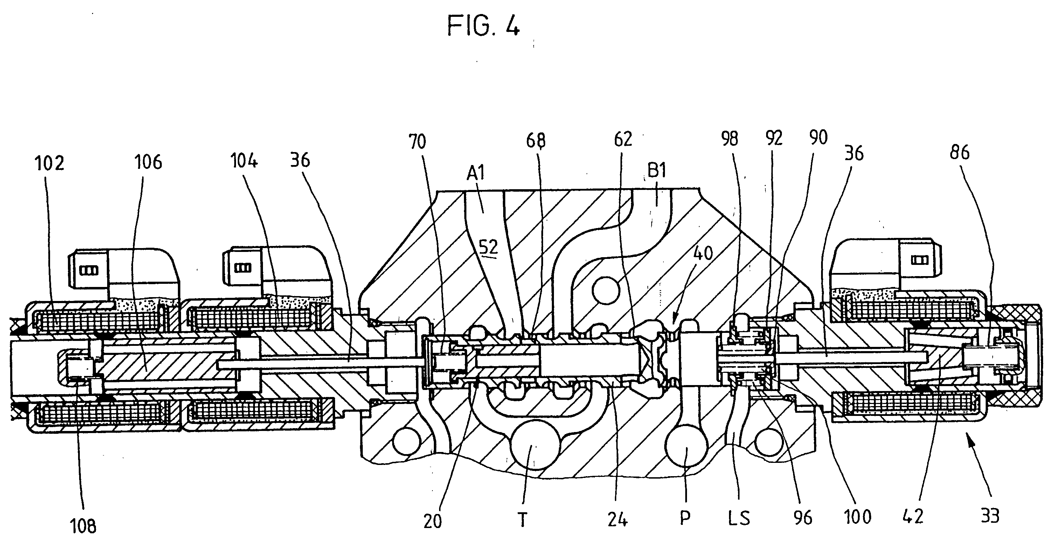

Eine der Arbeitsstellungen, in der der Arbeitsanschluß A₁ mit dem Pumpenanschluß P verbunden ist, ist in Fig. 4 dargestellt. Da es sich bei dem beschriebenen Wegeventil um ein Proportionalventil handelt, sind jedoch eine Vielzahl von weiteren Zwischenstellungen durch geeignete Ansteuerung des Proportionalmagneten 33 einstellbar, wobei durch die wirksame Blendenöffnung 40 der Volumenstrom zum Verbraucher vorbestimmt ist. In der Darstellung nach Fig. 4 ist der Kolben 66 in seiner Grundposition dargestellt, bei einer Hydraulikfluidströmung ist dieser jedoch derart ausgelenkt, daß der Mantelbohrungsstern 68 aufgesteuert ist.

Bei Bestromung des Spulenkörpers 104 wird der Ventilschieber 24 in entsprechender Weise nach rechts bewegt, so daß der Verbindungskanal 50 mit dem Pumpenkanal 46 verbunden ist, wobei der Volumenstrom wiederum unabhängig vom anliegenden Lastdruck durch die Meßblende 40 und die stromabwärts davon liegende Druckwaage 20 konstant gehalten wird. Der Ventilschieber 24 wird bei Bestromung des Spulenkörpers 104 gegen die Kraft der Druckfeder 86 und der Vorspannfeder 100 nach rechts (Fig. 2) verschoben, wobei der Federteller 98 vom Gehäuse abhebt und in Richtung zum Federteller 92 bewegt wird. Die Steuerfeder 100 entfaltet keine Wirkung, da der Axialabstand zwischen Anschlagkörper 90 und Ventilschieber 24 unverändert bleibt.

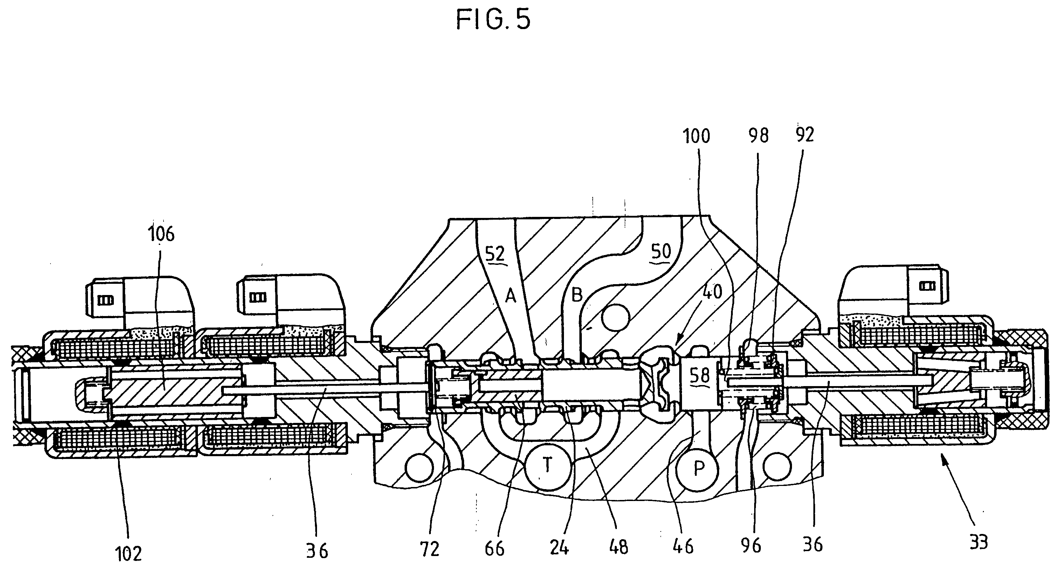

In der Darstellung gemäß Fig. 5 ist der Ventilschieber in seine Schwimmstellung verschoben, in der der Pumpenanschluß P abgesperrt ist und die Arbeitsanschlüsse A₁, B₁ und der Tankanschluß T miteinander verbunden sind. Um diese Ventilschieberendstellung zu erreichen, werden der Elektromagnet 33 und der Spulenkörper 102 der Elektromagnetanordnung 32 bestromt. Wie vorstehend ausgeführt wurde, ist der magnetische Fluß in der Grundstellung (Fig. 2) vom Spulenkörper 102 durch den Doppelanker 106 zunächst minimal, so daß die Elektromagnetanordnung 32 zunächst keine Wirkung entfaltet.

Aufgrund des Hubes des Stössels 36 des Elektromagneten 33 wird der Anker 106 jedoch aus-der Darstellung gemäß Fig. 2 nach links verschoben, bis der Spalt zwischen dem Spulenkörper 102 und dem Doppelanker 106 so gering ist, daß über den Spulenkörper 102 eine Kraft auf den Doppelanker 106 ausgeübt wird. Diese Zwischenposition ist als Arbeitsstellung in Fig. 4 dargestellt.

Wie bereits beschrieben, ist in dieser Zwischenposition der Federteller 92 von seiner Anlageschulter abgehoben. Durch die Wirkung des Spulenkörpers 102 wird der Doppelanker 106 aus der Zwischenposition gemäß Fig. 4 weiter nach links in die in Fig. 5 gezeigte Endposition verschoben. Der Ventilschieber 24 folgt dieser Axialbewegung des Stössels 36 aufgrund der Wirkung der Steuerfeder 100, die den Ventilschieber 24 zum Doppelanker 106 hin beaufschlagt, so daß der Ventilschieber 24 der Bewegung des Doppelankers 106 folgen kann. Die Anlageposition zwischen dem Anker 36 und der Anschlagscheibe 73 bleibt dabei aufrechterhalten. Durch den Hub des Elektromagneten 33 wird der Federteller 92 abgehoben, so daß die Vorspannfeder 96 zusammengedrückt wird. Nachdem der Elektromagnet 33 seinen vorbestimmten Hub durchgeführt hat, wird der Stössel 36 gegen die vom Elektromagneten 33 aufgebrachte Kraft durch die Kraft der Vorspannfeder 96 in seiner in Fig. 5 dargestellten Endposition gehalten, so daß der Ventilschieber 24 während seiner weiteren Axialverschiebung aufgrund der Wirkung der Steuerfeder 100 vom Stössel 36 des Elektromagneten 33 abhebt. In der in Fig. 5 gezeigten Endposition sperrt der zylinderförmige Steuerabschnitt 58 den Pumpenkanal 46 ab und die Verbindungskanäle 50, 52 sind über den Tankkanal 48 miteinander verbunden. Der Kolben 66 ist durch den Steuerdruck und die Steuerfeder 70 in seine Grundstellung vorgespannt.

Bei abgehobenem Stössel 36 ist die Axialbewegung des Ventilschiebers 24 und dessen Vorspannung gegen den Stössel 36 des Doppelankers 106 im wesentlichen durch die Wirkung der Steuerfeder 100 bestimmt.

Auf die Steuerfeder 100 kann verzichtet werden, wenn der Ventilschieber 24 an den Stössel des Doppelankers 106 angehängt wird. Dazu müsste beispielsweise der Stössel 36 mit der Anschlagscheibe 72 gekoppelt werden.

Durch die erfindungsgemäßen Maßnahmen läßt sich die Schwimmstellung ansteuern, ohne daß gesonderte Kanäle für Steuerleitungen und Vorsteuerventile im Ventilgehäuse vorgesehen sein müssen. Selbstverständlich können die Elektromagnete 33, 32 mit den Spulenkörpern 102, 104 und 84 auch in anderer Form (kinematische Umkehr) angeordnet werden. So könnten beispielsweise zwei stossende Magnete hintereinander geschaltet werden, um den Spulenkörper aus seiner Arbeitsstellung (in Wirklichkeit eine Vielzahl von Arbeitsstellungen) in die Endschaltstellung (Schwimmstellung) zu verschieben, wobei die Ansteuerung der Arbeitsposition durch Bestromung des außenliegenden Spulenkörpers 102 und die Endposition durch zusätzliche Bestromung des innenliegenden Spulenkörpers erfolgen könnte, der erst dann auf den Doppelanker wirkt, nachdem durch den außenliegenden Elektromagneten ein Vorhub durchgeführt wurde (Doppelmagnet).

## Patentansprüche

1. Elektrisch betätigtes Wegeventil mit einem Ventilschieber (24), der über zwei auf seine Steuerseiten wirkende Steuerelektromagnete (32b, 33) derart ansteuerbar ist, daß zwei Arbeitsanschlüsse (A₁, B₁) jeweils mit einem Pumpenanschluß (P) und einem Tankanschluß (T) verbindbar sind, **gekennzeichnet durch** einen dritten Elektromagnet (32a) zur Verschiebung des Ventilschiebers (24) aus einer Arbeitsstellung in eine Endschaltstellung, vorzugsweise eine Schwimmstellung, in der die Arbeitsanschlüsse (A₁, B₁) miteinander verbunden sind.

2. Wegeventil nach Patentanspruch 1, **dadurch gekennzeichnet, daß** der dritte Elektromagnet (32a) koaxial zu einem ersten der beiden Steuermagneten (32b, 33) angeordnet ist.

3. Wegeventil nach Patentanspruch 2, **dadurch gekennzeichnet, daß** der erste Steuermagnet (32b) und der dritte Elektromagnet (32a) einen gemeinsamen Doppelanker (106) haben, dem zwei Spulenkörper (102, 104) zugeordnet sind.

4. Wegeventil nach Patentanspruch 3, **dadurch gekennzeichnet, daß** die Spulenkörper (102, 104) koaxial hintereinander angeordnet sind, wobei der Doppelanker (106) in den Wirkbereich des Spulenkörpers (102) erst nach Bestromung des Spulenkörpers (42) des zweiten Steuermagneten (33) bringbar ist.

5. Wegeventil nach einem der vorhergehenden Patentansprüche, **dadurch gekennzeichnet, daß** der Ventilschieber (24) mittels Druckfedern (86, 108) in seine Mittelstellung vorgespannt ist, die auf die Rückseiten der beiden Anker (106, 42) der Elektromagnete (32, 33) wirken.

6. Wegeventil nach Patentanspruch 5, **dadurch gekennzeichnet, daß** eine Vorspannfeder (96) über zwei Federteller (92, 98) am Ventilgehäuse abgestützt ist, von denen einer durch den Ventilschieber (24) und der andere durch einen Stössel (36) des zweiten Elektromagneten (33) aus seiner Stützposition abhebbar ist, so daß die Vorspannfeder (96) gemeinsam mit einer der Druckfedern (86, 108) der Stellbewegung des Stössels (36) der Elektromagnete (32, 33) entgegenwirkt, wobei die Federrate der Vorspannfeder (96) größer als diejenige der Druckfeder (86, 108) ist.

7. Wegeventil nach Patentanspruch 5 oder 6, **dadurch gekennzeichnet, daß** der Ventilschieber (24) bei Bestromung des zweiten Elektromagneten (33) und des dritten Elektromagneten (32a) durch eine Steuerfeder (100) in Richtung seiner Endschaltstellung vorgespannt ist, die einerseits am Ventilschieber (24) und andererseits an dem Stössel (36) des zweiten Elektromagneten (33) abgestützt ist.

8. Wegeventil nach Patentanspruch 7, **dadurch gekennzeichnet, daß** die Steuerfeder (100) an einem Anschlagkörper (90) angreift, der mit dem Stössel (36) des zweiten Steuermagneten (33) verbunden ist und über den der stösselseitige Federteller (92) bei einem Hub des Stössels (36) von seiner Stützposition am Ventilgehäuse abhebbar ist.

9. Wegeventil nach einem der Patentansprüche 1 bis 5, **dadurch gekennzeichnet, daß** der Ventilschieber (24) mit demjenigen Stössel (36) verbunden ist, der dem dritten Elektromagneten (32a) zugeordnet ist.

10. Wegeventil nach Patentanspruch 9, **dadurch gekennzeichnet, daß** das Wegeventil ein stetig verstellbares 4-Wegeventil ist.

## Claims

1. Electrically operated directional valve including a valve spool (24) capable of being controlled by two control electromagnets (32b, 33) acting on its control sides such that two work ports (A₁, B₁) are respectively capable of being connected with a pump port (P) and a tank port (T), **characterized by** a third electromagnet (32a) for shifting said valve spool (24) from a work portion into a final switching position, preferably a floating position, wherein said work ports (A₁, B₁) are connected with each other.

2. Directional control valve in accordance with claim 1, **characterized in that** said third electromagnet (32a) is arranged coaxially with a first one of said two control magnets (32b, 33).

3. Directional control valve in accordance with claim 2, **characterized in that** said first control magnet (32b) and said third electromagnet (32a) have a common double armature (106) to which two coil bobbins (102, 104) are associated.

4. Directional control valve in accordance with claim 3, **characterized in that** said coil bobbins (102, 104) have a consecutive coaxial arrangement, wherein said double armature (106) may be taken into the effective region of said coil bobbin (102) only following energization of said coil bobbin (42) of said second control magnet (33).

5. Directional control valve in accordance with any one of the preceding claims, **characterized in that** said valve spool (24) is biased into its centered position by means of pressure springs (86, 108) acting on the rear sides of said two armatures (106, 42) of said electromagnets (32, 33).

6. Directional control valve in accordance with claim 5, **characterized in that** a biasing spring (96) is supported on the valve housing via two spring cups (92, 98) of which one may be raised from its supported position by said valve spool (24) and said other one by a plunger (36) of said second electromagnet (33), so that said biasing spring (96) jointly with one of said pressure springs (86, 108) counteracts the positioning movement of said plunger (36) of said electromagnets (32, 33), the spring rate of said biasing spring (96) being greater than that of said pressure spring (86, 108).

7. Directional control valve in accordance with claim 5 or 6, **characterized in that** said valve spool (24) in the event of energization of said second electromagnet (33) and of said third electromagnet (32a) is biased in the direction of its final switching position by a control spring (100) which is supported on said valve spool (24) on the one hand and on said plunger (36) of said second electromagnet (33) on the other hand.

8. Directional control valve in accordance with claim 7, **characterized in that** said control spring (100) acts on a stop body (90) which is connected to said plunger (36) of said second control magnet (33) and by means of which said plunger-side spring cup (92) may be raised from its supported position on the valve housing in the event of a stroke of said plunger (36).

9. Directional control valve in accordance with any one of claims 1 to 5, **characterized in that** said valve spool (24) is connected to the said one plunger (36) associated with said third electromagnet (32a).

10. Directional control valve in accordance with claim 9, **characterized in that** said directional control valve is a continuously adjustable 4-way directional control valve.

## Revendications

1. Soupape de distribution à actionnement électrique comportant un tiroir de soupape (24) qui peut être commandé, au moyen de deux électro-aimants de commande (32b, 33) agissant sur ses côtés de commande, de manière que deux raccords de travail (A₁, B₁) puissent être reliés chacun à un raccord de pompe (P) et à un raccord de réservoir (T), **caractérisée par** un troisième électro-aimant (32a) pour le coulissement du tiroir de soupape (24) d'une position de travail dans une position finale de coupure, de préférence une position flottante, dans laquelle les raccords de travail (A₁, B₁) sont reliés entre eux.

2. Soupape de distribution selon la revendication 1, **caractérisée en ce que** le troisième électro-aimant (32a) est disposé coaxialement à un premier des deux aimants de commande (32b, 33).

3. Soupape de distribution selon la revendication 2, **caractérisée en ce que** le premier électro-aimant de commande (32b) et le troisième électro-aimant (32a) ont une double palette (106) commune à laquelle sont associés deux corps de bobine (102, 104).

4. Soupape de distribution selon la revendication 3, **caractérisée en ce que** les corps de bobine (102, 104) sont disposés coaxialement l'un derrière l'autre, la double palette (106) pouvant être amenée dans la zone d'action du corps de bobine (102) après seulement que le corps de bobine (42) du deuxième aimant de commande (33) est traversé par un courant.

5. Soupape de distribution selon l'une des revendications précédentes, **caractérisée en ce que** le tiroir de soupape (24) est précontraint dans sa position centrale, au moyen de ressorts de compression (86, 108) qui agissent sur les faces arrière des deux palettes (106, 42) des électro-aimants (32, 33).

6. Soupape de distribution selon la revendication 5, caractetrisée en ce qu'un ressort de précontrainte (95) est soutenu sur le boîtier de soupape, par deux coupelles de ressort (92, 98), dont une peut être soulevée de sa position d'appui par le tiroir de soupape (24) et l'autre, par un poussoir (36) du deuxième électro-aimant (33), ce qui fait que le ressort de précontrainte (96) s'oppose, conjointement avec l'un des ressorts de compression (86, 108), au mouvement de réglage du poussoir (36) des électro-aimants (32, 33), la caractéristique du ressort de précontrainte (96) étant supérieure à celle du ressort de compression (86, 108).

7. Soupape de distribution selon la revendication 5 ou 6, **caractérisée en ce que** lorsque le deuxième électro-aimant (33) et le troisième électro-aimant (32a) sont parcourus par un courant, le tiroir de soupape (24) est précontraint en direction de sa position finale de coupure, par un ressort de commande (100) qui prend appui d'une part contre le tiroir de soupape (24) et d'autre part, contre le poussoir (36) du deuxième électro-aimant (33).

8. Soupape de distribution selon la revendication 7, **caractérisée en ce que** le ressort de commande (100) agit sur un corps de butée (90) qui est relié au poussoir (36) du deuxième aimant de commande (33) et qui peut être soulevé de sa position d'appui contre le boîtier de soupape, par la coupelle de ressort (92) côté poussoir, lors d'une course du poussoir (36)

9. Soupape de distribution selon l'une des revendications 1 à 5, **caractérisée en ce que** le tiroir de soupape (24) est relié au poussoir (36) qui est associé au troisième électro-aimant (32a).

10. Soupape de distribution selon la revendication 9, **caractérisée en ce que** la soupape de distribution est une soupape à quatre voies réglable en continu.
